# EUROPÄISCHE PATENTSCHRIFT

(11) **EP 1 756 930 B1**
(45) Veröffentlichungstag und Bekanntmachung des Hinweises auf die Patenterteilung: **20.08.2008**
(21) Anmeldenummer: 05759089.5
(22) Anmeldetag: 09.06.2005
(51) Int. Cl.: H02K 15/12

(54) **VERFAHREN ZUR HERSTELLUNG VON STATORPAKETEN FÜR LANGSTATOR-LINEARMOTOREN VON MAGNETSCHWEBEBAHNEN**
METHOD FOR PRODUCING STATOR PACKS FOR LONG-STATOR LINEAR MOTORS OF MAGNETIC LEVITATION RAILWAYS
PROCEDE POUR FABRIQUER DES PAQUETS DE TOLES DE STATOR POUR DES MOTEURS LINEAIRES A STATOR LONG SUR DES VEHICULES A SUSTENTATION MAGNETIQUE

(30) Priorität: 14.06.2004 DE 102004028947
(43) Veröffentlichungstag der Anmeldung: 28.02.2007
(73) Patentinhaber: ThyssenKrupp Transrapid GmbH, 34127 Kassel (DE)
(72) Erfinder: MUNK, Kurt, 79639 Grenzach (DE); TUM, Michael, 34128 Kassel (DE)
(74) Vertreter: Freiherr von Schorlemer, Reinfried
(86) Internationale Anmeldenummer: PCT/DE2005/001032
(87) Internationale Veröffentlichungsnummer: WO 2005/122365

(56) Entgegenhaltungen:
- US-A- 5 606 205
- US-A1- 2001 002 507

## Beschreibung

Die Erfindung betrifft ein Verfahren zur Herstellung von Statorpaketen für Langstator-Linearmotoren von Magnetschwebebahnen und ein nach diesem Verfahren hergestelltes Statorpaket.

Bei einem bekannten Verfahren dieser Art (DE 31 10 339 C2) werden mit Kleberschichten versehene und durch Stanzen erhaltene Blechzuschnitte bzw. Lamellen zu einem Stapel zusammengesetzt und danach durch Erwärmung unter gleichzeitiger Pressung zu einem Blechpaket miteinander verbunden. Anschließend wird das Blechpaket zusätzlich mit einem aus Epoxidharz bestehenden Überzug versehen, der insbesondere als Korrosionsschutzschicht für die beim Stanzen freigelegten Schnittkanten der Lamellen dient. Schließlich wird das Blechpaket durch Schrauben, Kleben oder sonstwie mit in seine Nuten eingesetzten Traversen, die zur Befestigung der Statorpakete am Fahrweg der Magnetschwebebahn benötigt werden, zum fertigen Statorpaket verbunden. Eine derartige Herstellung der Statorpakete ist wegen der zahlreichen Verfahrensschritte umständlich in der Durchführung, hinsichtlich der Korrosionsschutzschicht nicht einwandfrei und für eine Serienfertigung mit hoher Produktivität nicht ausreichend gut geeignet.

Es ist daher auch bereits bekannt (DE 197 03 497 A1 and US 2001/002507 A1), die Statorpakete unter Anwendung geschlossener Werkzeuge durch Druckgelieren mit einer Korrosionsschutzschicht zu überziehen. Hierbei wird das gesamte Statorpakete einschließlich der Traversen in einer Kavität einer geschlossenen Gießform angeordnet, in der beim Einspritzen eines härtbaren Gießharzgemisches ein Unterdruck von einigen Millibar aufrechterhalten wird, während das Gießharzgemisch mit einem Druck von mehr als 1 bar bis z. B. 3 bar zugeführt wird. Dieses Verfahren genügt zwar hohen technischen Anforderungen und hat sich in der Serienfertigung als brauchbar erwiesen. Aufgrund der Komplexität des Fertigungsprozesses ist jedoch keine ausreichende Prozeßsicherheit gegeben, d. h. die Fertigung unterliegt Qualitätsschwankungen. Außerdem ist die Produktivität begrenzt, da z. B. der Druck des Gießharzgemisches zur Vermeidung von Schwund auch während der Erhärtungsphase eine Zeitlang aufrechterhalten werden sollte. Weiterhin ist zur Erzielung eines einheitlichen Verlaufs des Gießharzgemisches in der Kavität die Anwendung mehrerer Angüsse erforderlich, was wegen des geschlossenen Werkzeugs zu aufwendigen und komplizierten Gießformen und Gießanlagen führt. Schließlich werden die Blechpakete zur exakten Positionierung in der Kavität mit aus porösen Gewebematten od. dgl. bestehenden Abstandselementen von den die Kavität begrenzenden Wandungen beabstandet, was zu einer Behinderung der Gießharzströmung führt und den Gießprozeß insgesamt verlangsamt.

Ausgehend davon besteht das der vorliegenden Erfindung zugrunde liegende technische Problem darin, das eingangs bezeichnete Verfahren dahingehend zu verbessern, daß bei vergleichsweise geringen Investitionskosten eine Steigerung der Produktivität möglich ist und auch in der Serienfertigung weitgehend von Blasen und Lunkern freie Statorpakete erhalten werden.

Zur Lösung dieses technischen Problems dienen die Merkmale des Anspruchs 1. Außerdem führt das erfindungsgemäße Verfahren zu Statorpaketen mit den Merkmalen des Anspruchs 11.

Die Erfindung bringt den Vorteil mit sich, daß drucklos und daher mit offenen und einfachen, insbesondere zweiteiligen Gießformen gearbeitet werden kann. Wegen der Verbindung des Blechpakets und der Traversen zu einer einstückigen Baueinheit vor dem Gießvorgang kann die Positionierung des Blechpakets in der Kavität mit Hilfe der Traversen vorgenommen werden, so daß Abstandselemente aus Gewebematerial und sonstige Positionierelemente nicht benötigt und daher kurze Füllzeiten ermöglicht werden. Dadurch kann die Belegungsdauer der Gießformen reduziert und gleichzeitig die Produktivität gesteigert werden. Dennoch werden auch beim schnellen Füllen der Gießformen von Blasen und Lunkern freie und damit qualitativ einwandfreie Statorpakete erhalten.

Weitere vorteilhafte Merkmale der Erfindung ergeben sich aus den Unteransprüchen.

Die Erfindung wird nachfolgend in Verbindung mit den beiliegenden, in unterschiedlichen Maßstäben gehaltenen Zeichnungen an einem Ausführungsbeispiel näher erläutert. Es zeigen:
Fig. 1 eine perspektivische, teilweise aufgebrochene Darstellung eines Statorpakets;
Fig. 2 eine perspektivische Darstellung einer neuen, speziell für das erfindungsgemäße Verfahren konzipierten Traverse;
Fig. 3 eine Seitenansicht der Traverse nach Fig. 2;
Fig. 4 einen schematischen Längsschnitt durch ein für das erfindungsgemäße Verfahren geeignetes Gießwerkzeug;
Fig. 5 eine Draufsicht auf das Gießwerkzeug nach Fig. 4; und
Fig. 6 und 7 Schnitte längs der Linien VI - VI und VII - VII der Fig. 5.

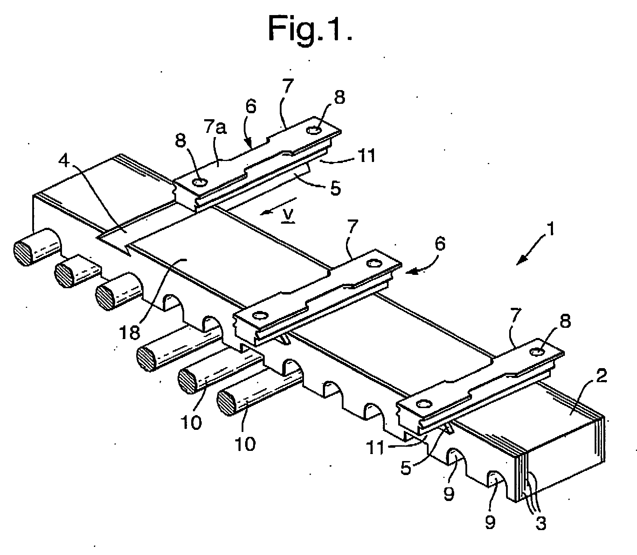

Nach Fig. 1 enthält ein Statorpaket 1 für Langstator-Linearmotoren von Magnetschwebebahnen eine Vielzahl von ferromagnetischen, bündig aneinander liegenden und ein Blechpaket 2 bildenden Blechen bzw. Lamellen 3. Die aus Stanzzuschnitten gebildeten Lamellen 3 weisen in einem oberen Bereich wenigstens je eine, hier drei randoffene Ausbrüche auf, die im fertigen Blechpaket 2 drei quer verlaufende, durchgehende Nuten 4 bilden. Die Nuten 4 haben vorzugsweise schwalbenschwanzförmige Querschnitte und dienen zur Aufnahme von entsprechend geformten Fußabschnitten 5, die an die Unterseiten von geraden Traversen 6 angeformt sind, die im wesentlichen nach Art von Doppel-T-Trägern ausgebildete Querschnitte aufweisen. Die Traversen 6 können daher, wie in Fig. 1 gezeigt ist, mit ihren Fußabschnitten 5 in Richtung eines Pfeils v in die Nuten 4 eingesetzt werden, bis sie auf beiden Seiten des Blechpakets 2 mit Kopfstücken 7 über das Blechpaket hinausragen.

Die Kopfstücke 7 sind mit je einem quer zur Längsrichtung der Traversen 6 angeordneten Durchgang 8 versehen. Beide Durchgänge 8 sind nach dem richtigen Einsetzen der Traversen 6 in die Nuten 4 von beiden Enden her frei zugänglich und zur Aufnahme von Befestigungsschrauben geeignet, die zur Befestigung der Traversen 6 am Fahrweg einer Magnetschwebebahn dienen. Oberflächen 7a der Kopfstücke 7 sind daher etwas oberhalb der Oberflächen der Blechpakete 2 angeordnet. Die Blechpakete 2 werden nach der Montage wegen der schwalbenschwanzförmigen Fußabschnitte 5 und der entsprechenden Nutenquerschnitte in zu den Schraubenachsen parallelen Richtungen im wesentlichen durch Formschluß an den Traversen 6 bzw. am Fahrweg gehalten.

An ihren Unterseiten sind die Bleche 3 mit weiteren, randoffenen Ausbrüchen versehen, die im fertigen Blechpaket 2 parallel zu den Nuten 4 angeordnete Nuten 9 (Fig. 1) bilden, in die nur schematisch angedeutete Wechselstromwicklungen 10 eingesetzt werden.

Statorpakete 1 der beschriebenen Art sind z. B. aus den Druckschriften DE 31 10 339 C2, DE 39 28 277 C1 und DE 197 03 497 A1allgemein bekannt, die zur Vermeidung von Wiederholungen durch Referenz zum Gegenstand der vorliegenden Offenbarung gemacht werden.

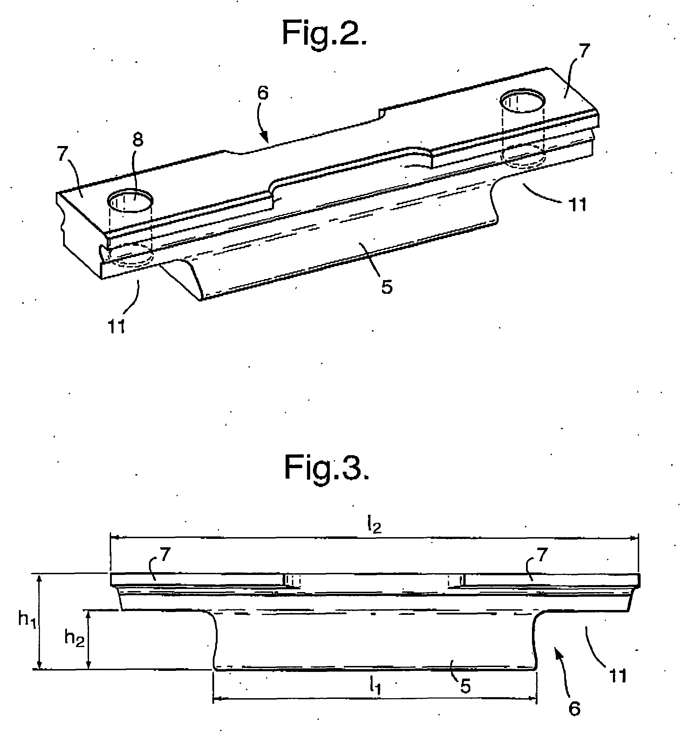

Erfindungsgemäß sind die Kopfstücke 7 der Traversen 6 mit von unten her eingearbeiteten Aussparungen 11 versehen, die im wesentlichen quaderförmige Querschnitte haben und über die Breiten der Traversen 6 durchgehend ausgebildet sind, wie insbesondere Fig. 2 und 3 zeigen. Dadurch erhalten die Traversen 6, in der Seitenansicht gemäß Fig. 3 betrachtet, ein im wesentlichen T-förmiges Profil, so daß sie in ihren mittleren, die Fußabschnitie 5 aufweisenden Bereichen eine Höhe h₁ und in unteren, die beiden Aussparungen 11 aufweisenden Bereichen eine Länge l₁ besitzen während in oberen, die beiden Kopfstücke 7 aufweisenden Bereichen die Länge der Traversen 6 ein Maß l₂ > I₁ hat. Die Höhe der Aussparungen 11 bzw die Abstände der Unterkanten der Fußabschnitte 5 von den Unterkanten der Kopfstücke 7 hat schließlich ein Maß h₂ < h₁. Dabei sind die Maße l₁ und l₂ (Fig. 3) so gewählt, daß sich die Fußabschnitten 5 im eingesetzten Zustand der Traversen 6 im wesentlichen über die ganze Breite des Blechpakets 2 erstrecken, während die Kopfstücke 7 mit den Durchgängen 8 außerhalb des Blechpaket 2 angeordnet sind, wie insbesondere Fig. 1 zeigt.

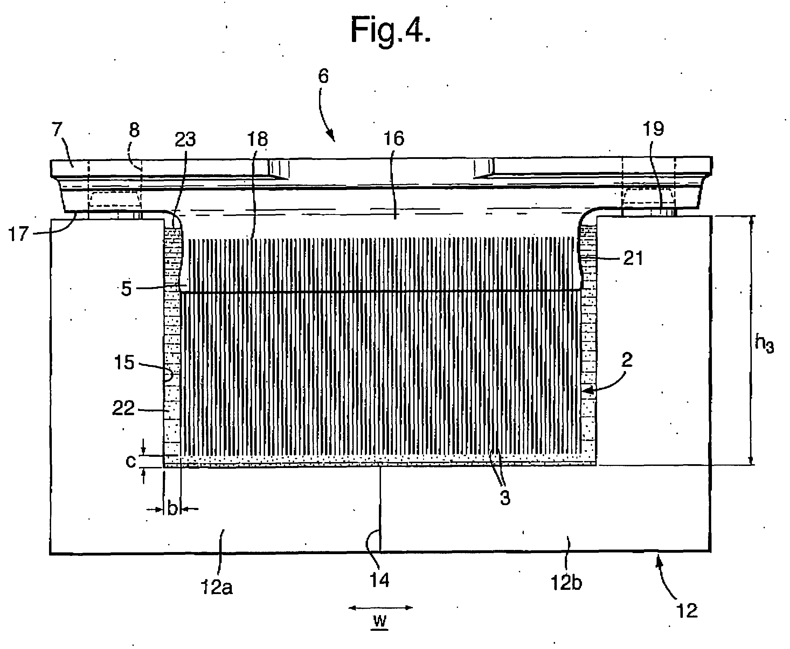

Die erfindungsgemäße Form der Traversen 6 dient insbesondere der vereinfachten Umhüllung des. Blechpakets 2 mit einer Korrosionsschutzschicht. Hierzu werden die Traversen 6 in einem ersten, vorbereitenden Arbeitsgang zunächst mit einer korrosionsfesten Lackierung überzogen, indem sie, falls erforderlich, entgratet und dann z. B. einern katodischen Tauchlackierungsprozeß unterworfen werden. Im Anschluß daran werden die Traversen 6 in die Nuten 4 des gestapelten Blechpakets 2 eingeführt und dann zusammen mit diesem erwärmt, um auf die Böden der Nuten 4 und/oder die Unterseiten der Fußabschnitte 5 aufgebrachte sowie auf den Breitseiten der Lamellen 3 befindliche Kleberschichten od. dgl. zu erweichen und dadurch einerseits die Lamellen 3 miteinander, andererseits das Blechpaket 2 mit den Traversen 6 zu einer einstückigen, vorgefertigen Baueinheit zu verbinden.
Die vorgefertigte Baueinheit wird jetzt in einem Gießwerkzeug behandelt, um das Blechpaket 2 mit einer Korrosionsschutzschicht zu versehen. Hierzu enthält das Werkzeug (Fig. 4) eine zweiteilige Gießform 12 mit zwei in Richtung eines Doppelpfeils w zusammen fahrbaren bzw. trennbaren Formhälften 12a und 12b, die im geschlossenen Zustand des Werkzeugs längs einer Trermebene 14 aneinander stoßen. Die Gießform 12 umschließt eine auch im geschlossenen Zustand nach oben offene Kavität 15, deren Wandungen längs einer Kontur verlaufen, die im wesentlichen der Außenkontur des Blechpakets 2 entspricht und zu dieser parallel angeordnet ist. Eine Höhe h₃ der Kavität 15 ist so bemessen, daß sie das Blechpaket 2 in seiner vollen Höhe und zusätzlich noch den Fußabschnitt 5 sowie kurze, daran angrenzende Abschnitte 16 der Traversen 6 aufnehmen kann, die zwischen Unterkanten 17 der Kopfstücke 7 und einer Oberseite 18 des Blechpakets 2 angeordnet sind und aus den Nuten 4 (Fig. 1) nach oben herausragen. Außerdem hat die Kavität 15 einen Querschnitt, der etwas größer ist, als dem Querschnitt des Blechpakets 2 entspricht, während sie in Längsrichtung der Traversen 6 etwas kleiner ist, als den Längen I₂ der Traversen 6 entspricht.

An oberen, die Kavität 15 umgebenden Rändern der Formhälften 12a, 12b bzw. deren Wandungen sind je zwei Positionierungszapfen 19 angebracht, deren Abstände genau den Abständen der beiden Durchgänge 8 in den Traversen 6 gleichen. Bei Anwendung von drei Traversen pro Blechpaket 2 sind drei Paare von derartigen Positionierungszapfen 19 vorgesehen.

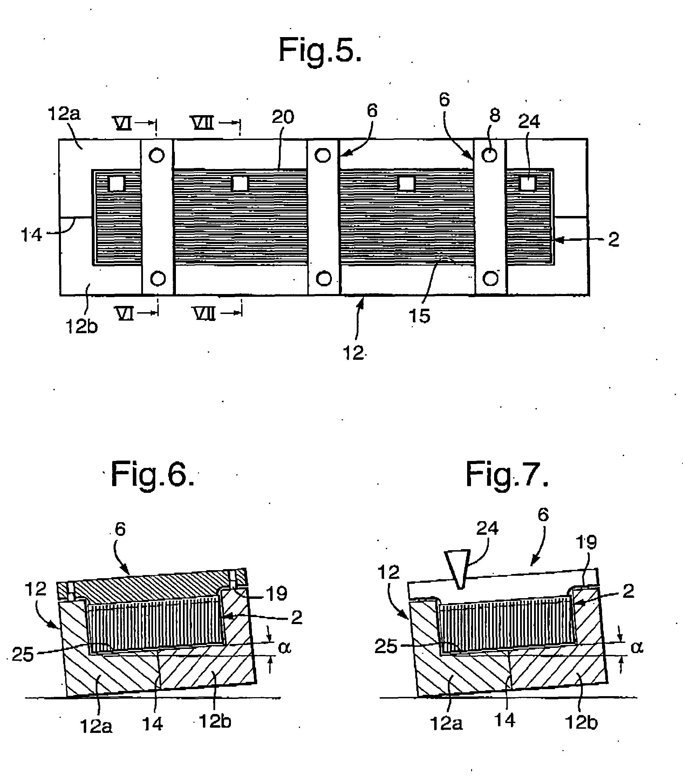

Die vorgefertigte, aus dem Blechpaket 2 und den Traversen 6 bestehende Baueinheit wird mit dem Blechpaket 2 voran und so in die Kavität 15 eingeführt, daß sich die Traversen 6 mit ihren Kopfstücken 7 auf die oberen Ränder der Gießform 12 auflegen und dabei die Positionierungszapfen 19 in zugeordnete Durchgänge 8 der Kopfstücke 7 eintreten, wie Fig. 4 deutlich zeigt. Damit ist die Lage der Baueinheit Blechpaket 2/Traverse 6 eindeutig relativ zur Gießform 12 festgelegt. Die Anordnung ist dabei außerdem so gewählt, daß die Seitenwände und der Boden des Blechpakets 2 von den zugeordneten, die Kavität 15 begrenzenden Wand- und Bodenteilen der Gießform 12 definierte Abstände aufweisen und daher einerseits zwischen den genannten Wandabschnitten Zwischenräume mit einer vorgewählten Breite b (Fig. 4) und andererseits zwischen den genannten Bodenabschnitten Zwischenräume mit einem vorgewählten Maß c (Fig. 4) verbleiben, indem z. B. das Maß h2 (Fig. 3) um den Wert c kleiner als das Maß h3 (Fig. 4) gewählt wird. Außerdem verbleibt nach dem Einsetzen der Baueinheit oberhalb des Blechpakets 2 ein rundum laufender Spalt 20 (Fig. 5), der durch eine besondere Formgebung von gekrümmten, unteren Übergangsflächen 21 zwischen den Fußabschnitten 5 und Unterkanten 17 der Kopfstücke 7 im Bereich der Traversen 6 noch vergrößert werden kann.

Nach dem Einlegen der beschriebenen Baueinheit entsprechend Fig. 4 in das Werkzeug wird die Kavität 15 mit einem korrisionsfesten Gießharzgemisch 22 gefüllt, das vorzugsweise ein härtbares, insbesondere wärmehärtbares Gemisch (Duroplast) aus einem Kunststoff (z.B. Epoxidharz) und einem Härter (z.B. Carbonsäure) enthält. Das Gießharzgemisch 22 wird in flüssigem Zustand von dem oberen Öffnungsrand bzw. Spalt 20 der Kavität 15 her eingeführt, bis sein Flüssigkeitsspiegel 23 dicht unter einem oberen Rand der die Kavität 15 umgebenden Wandteile steht (Fig. 4) bzw. wenigstens mit einem Maß oberhalb der Oberkante der Blechpakets 2 steht, das der Dicke der aufzubringenden Korrosionsschutzschicht entspricht.

Im Anschluß daran wird das Gießharzgemisch 22, ggf. unter Zuführung von Wärme, der Aushärtung überlassen. Dadurch werden das Blechpaket 2 und untere Randabschnitte der Traversen 6 mit einer dünnen, den Maßen b und c in Fig. 4 entsprechenden Gießharz- bzw. Korrosionsschutzschicht versehen und fest verbunden. Sobald diese ausreichend gehärtet ist, können die Formhälften 12a, 12b in Richtung des in Fig. 4 eingezeichneten Doppelpfeils w voneinander getrennt werden, worauf das fertige Statorpaket 1 entnommen werden kann.

Eine besonders gleichförmige Ausbildung der Korrosionsschutzschicht wird erreicht, wenn das Gießharzgemisch 22 gemäß Fig. 5 mit Hilfe einer Zuführleitung zugeführt wird, die eine Mehrzahl von in Längsrichtung des Blechpakets 2 beabstandeten Gießdüsen 24 aufweist. Mit besonderem Vorteil wird anstelle mehrerer Gießdüsen 24 eine über die Länge der Kavität 15 durchlaufende Gießrinne vorgesehen.

Gemäß einem besonders bevorzugten, derzeit für am Besten gehaltenen Ausführungsbeispiel der Erfindung wird die Gießform 12 beim Einfüllen der Gießharzmischung 22 leicht schräg gestellt, wie Fig. 6 und 7 schematisch zeigen. Dabei kann der Neigungswinkel α zwischen einem Boden 25 der Kavität 15 und der Horizontalen z. B. 5° bis 25°, vorzugsweise ca. 12° bis 20° betragen. Die tiefste Stelle der Kavität 15 liegt gemäß Fig. 7 zweckmäßig jeweils an derjenigen Längsseite, an welcher die Kavität 15 gefüllt wird, d.h. wo sich der Spalt 20 bzw. die Gießdüsen 24 oder die Gießrinne befinden. Dadurch wird erreicht, daß das flüssige Gießharzgemisch von der tiefsten Stelle der Kavität 15 aus allmählich nach oben steigt, dadurch die Luft aus der Kavität 15 und etwaigen, durch Hinterschneidungen gebildeten Hohlräumen verdrängt und einen von Blasen und Lunkern freien Aufbau der Korrosionsschutzschicht ermöglicht. Dieser Vorgang wird noch dadurch wesentlich unterstützt, daß die Positionierung des Blechpakets 2 in der Kavität 15 einerseits über dessen feste Verbindung mit den Traversen 6 und andererseits mittels der Positionierungszapfen 19 (Fig. 4 und 6) erfolgt, weshalb in dem Zwischenraum zwischen dem Blechpaket 2 und den Wandungen der Kavität 15 keine Abstandsgewebe od. dgl. vorgesehen werden brauchen. Das Gießharzgemisch 22 kann sich daher ungehindert in der Kavität 15 ausbreiten, was nicht zuletzt auch durch eine konkave, nach innen gerichtete Wölbung der Übergangsabschnitte 21 (Fig. 4) im Bereich der Traversen 6 gefördert wird.

Während des Befüllens mit dem Gießharzgemisch 22 oder auch unmittelbar danach kann die Gießform 12 allmählich wieder gerade gerichtet werden, wobei die Rückstellgeschwindigkeit zweckmäßig so klein gewählt wird, daß das Gießharzgemisch 22 nicht über die Oberkanten der die Kavität 15 begrenzenden Wandungen überläuft. Dadurch wird insgesamt eine störungsfreie Ausbreitung und Erhärtung des Gießharzgemisches 22 erreicht, wobei etwaiger Schwund aus einem oberhalb des Blechpakets 2 vorsorglich angelegten Überschuß an Gießharzgemisch 22 kompensiert werden kann. Außerdem führt das rasche, drucklos erfolgende Befüllen der Kavität 15 zu einer Steigerung der Produktivität und damit einer Reduzierung desjenigen Anteils der Produktionskosten, der auf die Herstellung der z.B. 2 mm bis 4 mm dicken Korrosionsschutzschicht entfällt. Weiterhin kann eine exakte Steuerung der Füllmengen vorgesehen werden, weil im Gegensatz zum bekannten Druckgelierverfahren keine Materialverluste aufgrund von notwendigen Anguß- und Entlüftungskanälen entstehen.

Die Erfindung ist nicht auf das beschriebene Ausführungsbeispiel beschränkt, das auf vielfache Weise abgewandelt werden kann. Dies gilt insbesondere für die im Einzelfall verwendeten Formen der Blechzuschnitte für das Blechpaket 2 sowie die Form der Nuten 4 und Fußabschnitte 5. Möglich wäre ferner, das gesamte Gießwerkzeug während des Gießvorgangs in einer Vakuumkammer anzuordnen. Außerdem gestattet das erfindungsgemäße Verfahren die Zugabe von erheblich größeren Mengen an insbesondere mineralischen Füllstoffen zum Gießharz, da die Kavität des Werkzeugs über größere Querschnitte gleichmäßig gefüllt werden kann und sich daher ein etwa verschlechtertes Fließverhalten des Gießharzgemisches weniger ungünstig auswirkt.

## Patentansprüche

1. Verfahren zur Herstellung von Statorpaketen (1) für Langstator-Linearmotoren von Magnetschwebebahnen, enthaltend die folgenden Verfahrensschritte:
- Stapeln einer Vielzahl von gestanzten, mit Kleber beschichteten, ferromagnetischen Lamellen (3) zu einem Paket (2), das in einer Oberfläche mit durchgehenden Nuten (4) versehen ist, wobei die Nuten (4) zur Aufnahme von Fuβabschitten (5), die an die Unterseiten von geraden Traversen (6) angeformt sind, dienen
- Überziehen den Traversen (6) mit einer korrosionfesten Lackierung in einen vorbereitenden Arbeitsgang
- Einsetzen je einer Traverse (6) in jede Nut (4), wobei jede Traverse (6) an beiden Enden je ein über das Blechpaket (2) vorstehendes, aus der Nut (4) ragendes, zur Unterseite hin mit einer Aussparung (11) versehenes Kopfstück (7) aufweist, in dem wenigstens je ein Durchgang (8) ausgebildet ist,
- Verbinden des Blechpakets (2) und der Traversen (6) zu einer festen Baueinheit,
- Einlegen der Baueinheit in eine nach oben offene Kavität (15) einer Gießform (12) derart, daß das Blechpaket (2) in der Kavität (15) zu liegen kommt und sich die Traverse (6) mit ihren Kopfstücken (7) auf Ränder von die Kavität (15) begrenzenden Wandabschnitten auflegt, wobei an den Wandabschnitten vorgesehene Positionierungszapfen (19) zumindest teilweise in die Durchgänge (8) der Kopfstücke (7) eintreten wobei die Kopfstücke (7) an ihren den Lamellen (3) gegeübergestellten Unterseiten Ausnehmaungen (11) aufweisen und wobei die Anordnung so getroffen ist, daß zwischen den die Kavität (15) begrenzenden Wandungen und den Böden der Gießform (12) einerseits und dem Blechpaket (2) und einem angrenzenden, in den Nuten (4) befindlichen Teil der Traversen (6) andererseits Zwischenräume verbleiben,
- Füllen der Kavität (15) mit einem Gießharzgemisch (22), um das Blechpaket (2) und die angrenzenden Teile der Traversen (6) mit einer Korrosionsschutzschicht zu umgeben,
- Öffnen der Gießform (12) nach einem zumindest teilweisen Erhärten des Gießharzgemisches (22) und
- Entnahme des Statorpakets (1) aus der Gießform (12).

2. Verfahren nach Anspruch 1, **dadurch gekennzeichnet, daß** das Füllen der Kavität (15) an einer Längsseite der Gießform (12) längs einer Gießrinne oder mit mehreren Gießdüsen (24) erfolgt.

3. Verfahren nach Anspruch 1 oder 2, **dadurch gekennzeichnet, daß** die Gießform (12) beim Füllen mit dem Gießharzgemisch (22) schräg gestellt wird.

4. Verfahren nach Anspruch 3, **dadurch gekennzeichnet, daß** die Schrägstellung relativ zu derjenigen Längsseite erfolgt, an der sich die Gießrinne oder die Gießdüsen (24) befinden.

5. Verfahren nach Anspruch 3 oder 4, **dadurch gekennzeichnet, daß** die Schrägstellung derart erfolgt, daß derjenige Bereich der Kavität (15), an dem sich die Gießrinne bzw. die Gießdüsen (24) befinden, am tiefsten liegt.

6. Verfahren nach einem der Ansprüche 3 bis 5, **dadurch gekennzeichnet, daß** die Schrägstellung unter einem Winkel von 5° bis 25°, vorzugsweise von 12° bis 20° erfolgt.

7. Verfahren nach einem der Ansprüche 1 bis 6, **dadurch gekennzeichnet, daß** die Durchgänge (8) in den Kopfstücken (7) der Traversen (6) gleichzeitig als Schraublöcher für Befestigungsschrauben eingerichtet sind.

8. Verfahren nach einem der Ansprüche 3 bis 7, **dadurch gekennzeichnet, daß** die Gießform (12) nach Beginn des Füllens mit dem Gießharzgemisch (22) allmählich wieder gerade gerichtet wird.

9. Verfahren nach einem der Ansprüche 1 bis 8, **dadurch gekennzeichnet, daß** die Traversen (6) vor dem Einsetzen in die Nuten (4) des Blechpakets (2) einem katodischen Tauchlackierungsprozess unterworfen werden.

10. Verfahren nach einem der Ansprüche 1 bis 9, **dadurch gekennzeichnet, daß** das Füllen der Kavität mit dem Gießharzgemisch (22) drucklos erfolgt.

11. Statorpaket für den Langstator einer Magnetschwebebahn mit einer Vielzahl von ein Blechpaket (2) bildenden Blechen (3), die an oberen Enden randoffene Ausbrüche aufweisen, die wenigstens eine durchgehende Nut (4) bilden, mit wenigstens einer mit dem Blechpaket (2) fest verbundenen Traverse (6), die ein in der Nut (4) angeordnetes Fußabschnitt (5) und an ihren Enden je ein über die Nut (4) vorstehendes, aus der Nut (4) ragendes, mit wenigstens je einem Durchgang (8) versehenes Kopfstück (7) aufweist, und mit einer Korrosionsschutzschicht für das Blechpaket (2) und die Traverse (6), **dadurch gekennzeichnet, daß** die Kopfstücke (7) an ihren den Bleinen gegenüber gestellten Unterseiten Ausnehmungen (11) aufweisen und die Korrosionsschutzschicht für das Blechpaket (2) und einen angrenzenden Teil des Fußabschnitt (5) aus einem Cheßharzgemisch, der übrige Teil der Korrosionsschutzschicht dagegen aus einer korrosionsfesten Lackierung hergestellt ist.

## Claims

1. A method for producing stator packs (1) for long-stator linear motors of magnetic levitation railways, comprising of the following method steps:
- Stacking a plurality of punched ferromagnetic sheets (3) coated with an adhesive to form a stack (2) that is provided with continuous grooves (4) in one surface, wherein the grooves (4) serve to receive foot sections (5) which are formed on the undersides of straight cross-pieces (6);
- Coating the cross-pieces (6) with a corrosion-resistant layer in a prepatory process step;
- Inserting a cross member (6) each into each groove (4), each cross member (6) having at both ends a head part (7) protruding beyond said metal sheet stack (2) projecting from said groove (4) and provided with a recess (11) towards its underside, with at least one passage (8) each being configured in each head part;
- Connecting the metal sheet stack (2) and the cross members (6) to a firm structural unit;
- Inserting the structural unit into an open-top cavity (159) of a casting mould (12) in such a manner that the metal sheet stack (2) comes to rest in the cavity (15) and that the cross member (6) with its head parts (7) lays itself onto rims of wall sections bordering the cavity (15), wherein positioning pins (19) provided at the wall sections at least partly enter into the passages (8) of the head parts (7), wherein the head parts (7) are provided with recesses (11) at their undersides opposing the sheets (3), and wherein the arrangement is so chosen that spaces remain between the walls bordering the cavity (15) and the bottoms of the casting mould (12) on the one hand and the metal sheet stack (2) and an adjacent part of the cross members (6) being arranged in the grooves (4) on the other hand;
- Filling the cavity (15) with a casting resin mixture (22) to cover the metal sheet stack (2) and the adjacent parts of the cross members (6) with a corrosion protection layer;
- Opening the casting mould (123) after an at least partly hardening of the casting resin mixture (22), and
- Removing the stator pack (1) from the casting mould (12).

2. A method according to Claim 1, **characterized in that** the filling of the cavity (15) is effected at a longitudinal side of the casting mould (12) alongside a casting channel or by way of several casting nozzles (24).

3. A method according to Claim 1 or 2, **characterized in that** the casting mould (12) is brought into an oblique position when being filled with the casting resin mixture (22).

4. A method according to Claim 3, **characterized in that** the oblique positioning is taken relatively to that longitudinal side at which the casting channel or the casting nozzles (24) are located.

5. A method according to Claim 3 or 4, **characterized in that** the oblique positioning is so taken that the area of the cavity (15) where the casting channel and/or casting nozzles (24) are located lies at the deepest point.

6. A method according to any of the preceding Claims 3 to 5, **characterized in that** the oblique position is taken at an angle of 5° to 25 ° , preferably at an angle of 12° to 20°.

7. A method according to any of the preceding Claims 1 to 6, **characterized in that** the passages (8) in the head parts (7) of the cross members (6) are simultaneously arranged as screwholes for fixing screws.

8. A method according to any of the preceding Claims 3 or 7, **characterized in that** the casting mould (12) is gradually raised again to the horizontal after the process of filling-in the casting resin mixture has begun.

9. A method according to any of the preceding Claims 1 to 8, **characterized in that** the cross members (6) are subjected to a cathodic dipping process before they are inserted into the grooves (4) of the metal sheet stack (2).

10. A method according to any of the preceding Claims 1 or 9, **characterized in that** the filling of the cavity with the casting resin mixture (22) is effected in a pressureless mode.

11. A stator pack for the long-stator linear motor of a magnetic levitation railway with a plurality of sheets (3) forming a sheet stack (2) and having at upper ends outbreaks open to the rim and forming at least one continous groove (4), with at least one cross-piece (6) being firmly connected to the sheet stack (2), having a foot section (5) arranged in the groove (4) and having at its ends a head part (7) protruding beyond the groove (4), projecting from the groove (4) and being provided with at least one passage (8) each, and with a corrosion protection layer for the sheet stack (2) and the cross-piece (6), charaterized in that the head portions (7) are provided with recesses (11) at their undersides opposing the sheets (3) and that the corrosion protection layer for the sheet stack (2) and an adjacent part of the foot section (5) is made of a casting resin mixture, whereas the remaining portion of the corrosion protection layer is made of a corrosion resistant layer.

## Revendications

1. Procédé de fabrication de paquets de tôles de stator (1) pour des moteurs linéaires à stator long de véhicules à sustentation magnétique, comprenant les étapes de procédé suivantes :
- empilement d'une pluralité de lamelles (3) ferromagnétiques découpées à l'emportepièce, revêtues d'un adhésif pour former un paquet (2) qui est pourvu sur une surface de rainures continues (4), les rainures (4) servant à recevoir des sections de pied (5) qui sont formées sur les faces inférieures de traverses rectilignes (6),
- recouvrement des traverses (6) avec un vernis résistant à la corrosion lors d'une opération préparatoire,
- insertion de chaque fois une traverse (6) dans chaque rainure (4), chaque traverse (6) présentant aux deux extrémités une pièce de tête (7) en saillie au-dessus du paquet de tôles (2), dépassant de la rainure (4), pourvue d'un évidement (11) vers sa face inférieure, dans chacune desquelles au moins un passage (8) est formé,
- assemblage du paquet de tôles (2) et des traverses (6) pour former une unité de construction rigide,
- insertion de l'unité de construction dans une cavité (15) ouverte vers le haut (15) d'un moule (12) de façon que le paquet de tôles (2) repose dans la cavité (15) et que la traverse (6) se pose par ses pièces de tête (7) sur des bords de sections de paroi limitant la cavité (15), des tenons de positionnement (19) prévus sur les sections de paroi pénétrant au moins partiellement dans les passages (8) des pièces de tête (7), les pièces de tête (7) présentant des évidements (11) sur leurs faces inférieures confrontées aux lamelles (3), et l'agencement étant conçu de façon qu'il reste des espaces entre les parois limitant la cavité (15) et les fonds du moule (12) d'une part, et le paquet de tôles (2) et une partie adjacente des traverses (6) se trouvant dans les rainures (4) d'autre part,
- remplissage de la cavité (15) avec un mélange de résine de coulée (22) pour entourer le paquet de tôles (2) et les parties adjacentes des traverses (6) d'une couche de protection contre la corrosion,
- ouverture du moule (12) après durcissement au moins partiel du mélange de résine de coulée (22) et
- prélèvement du paquet de tôles de stator (1) du moule (12).

2. Procédé selon la revendication 1, **caractérisé en ce que** le remplissage de la cavité (15) est réalisé sur un côté longitudinal du moule (12) le long d'une goulotte de coulée ou avec plusieurs buses de coulée (24).

3. Procédé selon la revendication 1 ou 2, **caractérisé en ce que** le moule (12) est incliné lors du remplissage avec le mélange de résine de coulée (22).

4. Procédé selon la revendication 3, **caractérisé en ce que** la position inclinée est prise par rapport au côté longitudinal sur lequel la goulotte de coulée ou les buses de coulée (24) sont situées.

5. Procédé selon la revendication 3 ou 4, **caractérisé en ce que** la position inclinée est prise de façon que la zone de la cavité (15) où la goulotte de coulée ou les buses de coulée (24) sont situées se trouve au point le plus bas.

6. Procédé selon l'une des revendications 3 à 5, **caractérisé en ce que** la position inclinée est prise à un angle de 5° à 25°, de préférence de 12° à 20°.

7. Procédé selon l'une des revendications 1 à 6, **caractérisé en ce que** les passages (8) dans les pièces de tête (7) des traverses (6) sont conçus en même temps comme des trous de vis pour des vis de fixation.

8. Procédé selon l'une des revendications 3 à 7, **caractérisé en ce que** le moule (12) est progressivement redressé après le début du remplissage avec le mélange de résine de coulée (22).

9. Procédé selon l'une des revendications 1 à 8, **caractérisé en ce que** les traverses (6) sont soumises à un processus de vernissage par immersion cathodique avant l'insertion dans les rainures (4) du paquet de tôles (2).

10. Procédé selon l'une des revendications 1 à 9, **caractérisé en ce que** le remplissage de la cavité avec le mélange de résine de coulée (22) s'effectue sans pression.

11. Paquet de tôles de stator pour le stator long d'un véhicule à sustentation magnétique avec une pluralité de tôles (3) formant un paquet de tôles (2) qui présentent aux extrémités supérieures des évidements ouverts au bord qui forment au moins une rainure continue (4), avec au moins une traverse (6) reliée rigidement au paquet de tôles (2), qui présente une section de pied (5) disposée dans la rainure (4) et à chacune de ses extrémités une pièce de tête (7) en saillie au-dessus de la rainure (4), dépassant de la rainure (4), pourvue d'au moins un passage (8), et avec une couche de protection contre la corrosion pour le paquet de tôles (2) et la traverse (6), **caractérisé en ce que** les pièces de tête (7) présentent des évidements (11) sur leurs faces inférieures confrontées aux tôles et que la couche de protection contre la corrosion pour le paquet de tôles (2) et une partie adjacente de la section de pied (5) est réalisée au moyen d'un mélange de résine de coulée, la partie restante de la couche de protection contre la corrosion par contre au moyen d'un vernis résistant à la corrosion.
